# EUROPÄISCHE PATENTSCHRIFT

(11) **EP 3 109 493 B1**
(45) Veröffentlichungstag und Bekanntmachung des Hinweises auf die Patenterteilung: **28.10.2020**
(21) Anmeldenummer: 16175615.0
(22) Anmeldetag: 22.06.2016
(51) Int. Cl.: F16C 19/49, F16C 19/50, F16C 33/58, F03D 80/70

(54) **WÄLZLAGERANORDNUNG UND BLATTLAGER FÜR EINE WINDKRAFTANLAGE**
ROLLING BEARING ASSEMBLY AND A BLADE BEARING FOR A WIND POWER PLANT
AGENCEMENT DE PALIER A ROULEMENT ET LOGEMENT DE PALE POUR UNE EOLIENNE

(30) Priorität: 25.06.2015 DE 102015110246
(43) Veröffentlichungstag der Anmeldung: 28.12.2016
(73) Patentinhaber: thyssenkrupp rothe erde Germany GmbH, 44137 Dortmund (DE); thyssenkrupp AG, 45143 Essen (DE)
(72) Erfinder: Lüneburg, Bernd, 45481 Mülheim an der Ruhr (DE); Rollmann, Jörg, 59558 Lippstadt (DE); Elfert, Gunther, 59597 Erwitte (DE)
(74) Vertreter: thyssenkrupp Intellectual Property GmbH

(56) Entgegenhaltungen:
- EP-B1- 2 087 249
- WO-A1-2013/117980
- CN-U- 203 477 083
- DE-A1-102010 027 011
- DE-A1-102012 002 203

## Beschreibung

### Stand der Technik

Die vorliegende Erfindung betrifft eine Wälzlageranordnung, insbesondere Großwälzlageranordnung, aufweisend einen Innenring und einen relativ zum Innenring um eine Rotationsachse drehbaren und in radialer Richtung überlappenden Außenring, wobei zwischen dem Innenring und dem Außenring zwei in axialer Richtung zueinander versetzte Reihen von kugelförmigen Wälzkörpern angeordnet sind, wobei die Wälzkörper jeweils in am Innenring und am Außenring ausgebildeten Laufbahnen laufen, wobei der Innenring und der Außenring einander mittels eines am Innenring oder am Außenring ausgebildeten zwischen die zwei Reihen von Wälzkörpern vorspringenden Radialvorsprungs in axialer Richtung überlappen.

Solche Wälzlageranordnungen werden beispielsweise als Blattlager zur drehbaren Anbindung von Rotorblättern bei Windkraftanlagen verwendet, um durch die Einstellung des Blattwinkels eine Leistungsregelung der Windkraftanlage zu ermöglichen.

Aus der EP 2 087 249 B1 ist eine derartige Wälzlageranordnung mit zwei in axialer Richtung zueinander versetzten Reihen von kugelförmigen Wälzkörpern bekannt. Bei dieser Wälzlageranordnung ist ein Tragwinkel, den eine Verbindungslinie zwischen den Zentren der Berührungspunkte eines Wälzkörpers mit dessen beiden Laufbahnen gegenüber einer zur Rotationsachse senkrechten Ringebene einschließt, so gewählt, dass er in einem Bereich zwischen 75 bis 90 Grad liegt. Aufgrund derart großer Tragwinkel sind die Wälzkörperreihen in der Lage, Axialkräfte zu übertragen, ohne dabei allzu große Radialkräfte zu erzeugen. Die Flächenpressungen zwischen den kugelförmigen Wälzkörpern und ihren Laufbahnen sind in diesem Tragwinkelbereich minimal.

Bei der Verwendung solcher Wälzlageranordnungen als Blattlager einer Windkraftanlage bildet sich entlang des Umfangs der Wälzlageranordnung in jeder Wälzkörperreihe typischerweise ein zusammenhängender Umfangsbereich aus, in welchen die kugelförmigen Wälzkörper belastet werden. Bei der bekannten Wälzlageranordnung hat es sich als nachteilig herausgestellt, dass dieser Umfangsbereich, bei beiden Wälzkörperreihen mehr als die Hälfte des Umfangs der Wälzlageranordnung einnimmt, so dass sich die Umfangsbereiche der beiden Wälzkörperreihen, in welchen die kugelförmigen Wälzkörper belastet werden, überlappen. Das Überlappen führt zu einer Verspannung und/oder zum Auftreten von Umfangskräften innerhalb der Wälzkörperreihen, wodurch sich der Drehwiderstand der Wälzlageranordnung unerwünscht erhöht.

### Offenbarung der Erfindung

Vor diesem Hintergrund ist es Aufgabe der vorliegenden Erfindung, ein Wälzlager mit reduziertem Drehwiderstand anzugeben, ohne die Belastung der kugelförmigen Wälzkörper übermäßig zu erhöhen.

Bei einer Wälzlageranordnung der eingangs genannten Art wird die Aufgabe dadurch gelöst, dass der Tragwinkel, den eine Verbindungslinie zwischen den Zentren der Berührungspunkte eines Wälzkörpers mit dessen beiden Laufbahnen gegenüber einer zur Rotationsachse senkrechten Ringebene einschließt, in einem Bereich von 60 bis 65 Grad liegt.

Gegenüber einer Wälzlageranordnung mit einem größeren Tragwinkel ergibt sich bei einem Tragwinkel im Bereich von 60 bis 65 Grad in beiden Wälzkörperreihen ein Umfangsbereich, in welchen die kugelförmigen Wälzkörper belastet werden, welcher weniger als die Hälfte des Umfangs der Wälzlageranordnung einnimmt. Hierdurch kann eine Überlappung der Umfangsbereiche der beiden Wälzkörperreihen, in welchen die kugelförmigen Wälzkörper belastet werden, verhindert werden, so dass die Gefahr des Auftretens von Verspannungen und/oder von Umfangskräften innerhalb der Wälzkörperreihen verringert wird. Zudem hat sich herausgestellt, dass die Flächenpressung zwischen Wälzkörper und entsprechender Laufbahn nur geringfügig gegenüber größeren Tragwinkeln erhöht ist, wobei die Flächenpressung jedoch geringer ist, als bei kleineren Tragwinkeln. Insgesamt kann durch einen Tragwinkel im Bereich von 60 bis 65 Grad der Drehwiderstand der Wälzlageranordnung wirksam reduziert werden, wobei die kugelförmigen Wälzkörper nur einer geringfügig erhöhten Belastung ausgesetzt sind.

Bevorzugt liegt der Tragwinkel in einem Bereich von 63 bis 65 Grad, besonders bevorzugt bei 60 oder 61 oder 62 oder 63 oder 64 oder 65 Grad. Es hat sich herausgestellt, dass bei einer derartigen Wahl des Tragwinkels der Drehwiderstand besonders wirkungsvoll reduziert werden kann ohne die Belastung der kugelförmigen Wälzkörper übermäßig zu erhöhen.

Konstruktiv vorteilhaft ist eine Ausgestaltung, bei welcher der Außenring oder der Innenring eine umlaufende Nut aufweist, in welche der am Innenring oder am Außenring angeordnete Radialvorsprung entgegen der radialen Richtung vorsteht, so dass ein kompakter Aufbau der Wälzlageranordnung ermöglicht wird.

Vorteilhaft ist es ferner, wenn an den Flanken des Radialvorsprungs Laufbahnen für die kugelförmigen Wälzkörper ausgebildet sind. Eine derartige Ausgestaltung bringt den Vorteil mit sich, dass die Wälzkörper im Bereich zwischen den Flanken des Radialvorsprungs und einer Innenseite der Nut geführt werden können.

Eine bevorzugte Ausgestaltung sieht vor, dass in axialer Richtung zwischen den beiden Reihen von Wälzkörpern ein radiales Zusatzlager angeordnet ist. Über das radiale Zusatzlager können in radialer Richtung wirkende Kräfte zwischen dem Innenring und dem Außenring übertragen werden. Besonders bevorzugt ist das radiale Zusatzlager an einer die Flanken verbindenden Stirnseite des Radialvorsprungs angeordnet.

In diesem Zusammenhang hat es sich als vorteilhaft erwiesen, wenn das radiale Zusatzlager Wälzkörper in Form von Zylinderrollen aufweist, wobei die jeweiligen Drehachsen der Zylinderrollen im Wesentlichen parallel zur Rotationsachse verlaufen, wobei eine Laufbahn für die Zylinderrollen an einer Stirnseite des Radialvorsprungs ausgebildet ist und wobei eine andere Laufbahn für die Zylinderrollen, insbesondere mittig, in der umlaufenden Nut ausgebildet ist.

Die Wälzlageranordnung weist bevorzugt einen Durchmesser im Bereich von 1 m bis 10 m, bevorzugt von 3 m bis 7 m, besonders bevorzugt von 4 m bis 6 m auf, so dass sie in einem Blattlager für eine Windkraftanlage Verwendung finden kann.

Ein weiterer Gegenstand der Erfindung ist ein Blattlager für eine Windkraftanlage aufweisend eine vorstehend beschriebene Wälzlageranordnung.

Bei dem Blattlager ergeben sich dieselben Vorteile wie sie bereits im Zusammenhang mit der erfindungsgemäßen Wälzlageranordnung beschrieben worden sind.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den Erfindungsgedanken nicht einschränken.

### Kurze Beschreibung der Figuren

Die **Figur 1** zeigt ein Ausführungsbeispiel einer Windkraftanlage gemäß der Erfindung in einer Frontalansicht.
Die **Figur 2** zeigt ein Ausführungsbeispiel einer erfindungsgemäßen Wälzlageranordnung in einer Schnittdarstellung.
Die **Figur 3** zeigt die Flächenpressung zwischen dem kugelförmigen Wälzkörper und der Laufbahn in Abhängigkeit von dem Tragwinkel für zwei typische Lastfälle der in Figur 2 gezeigten Wälzlageranordnung.
Die **Figur 4** zeigt die Kontaktgrenzen der kugelförmigen Wälzkörper über der Abwicklung des Lagerumfangs für einen ersten Lastfall der in Figur 2 gezeigten Wälzlageranordnung mit einem Tragwinkel von 60 Grad.
Die **Figur 5** zeigt die Kontaktgrenzen der kugelförmigen Wälzkörper über der Abwicklung des Lagerumfangs für einen zweiten Lastfall der in Figur 2 gezeigten Wälzlageranordnung mit einem Tragwinkel von 60 Grad.
Die **Figur 6** zeigt die Kontaktgrenzen der kugelförmigen Wälzkörper über der Abwicklung des Lagerumfangs für den ersten Lastfall der in Figur 2 gezeigten Wälzlageranordnung mit einem Tragwinkel von 90 Grad.
Die **Figur 7** zeigt die Kontaktgrenzen der kugelförmigen Wälzkörper über der Abwicklung des Lagerumfangs für den zweiten Lastfall der in Figur 2 gezeigten Wälzlageranordnung mit einem Tragwinkel von 90 Grad.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

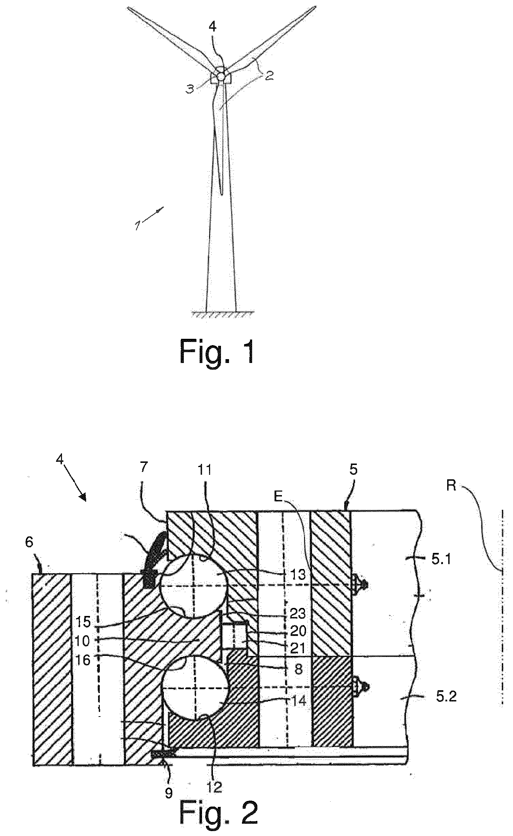

In der **Figur 1** ist eine Windkraftanlage 1 gezeigt, die einen auf einem Turm angeordneten Rotor 3 aufweist. Der Rotor 3 ist über ein Azimut-Lager gegenüber dem Turm in Azimut drehbar gelagert. An dem Rotor 3 sind mehrere Rotorblätter 2 vorgesehen, welche zur Einstellung des Blattwinkels der einzelnen Rotorblätter 2 über Blattlager 4 drehbar an dem Rotor 3 gelagert sind.

Das Azimut-Lager und die Blattlager 4 sind als Großwälzlager mit einem Durchmesser im Bereich von 1 m bis 10 m, bevorzugt von 3 m bis 7 m, besonders bevorzugt von 4 m bis 6 m ausgebildet. Nachfolgend soll ein Blattlager 4 beschrieben werden, welches die Rotorblätter 2 mit dem Rotor 3 drehbar verbindet. Alternativ oder zusätzlich ist es möglich, ein Azimut-Lager der Windkraftanlage 1 wie nachfolgend beschrieben auszubilden.

Das in der **Figur 2** dargestellte Blattlager 4 weist eine erfindungsgemäße Wälzlageranordnung auf. Die Wälzlageranordnung umfasst einen Innenring 5 sowie einen relativ zum Innenring 6 um eine Rotationsachse R drehbar angeordneten Außenring 6, wobei die Rotationsachse in Figur 2 nur schematisch dargestellt ist. Der mittelte Radius des Innenrings 5 ist kleiner als der mittlere Radius des Außenrings 6. Da der Außenradius des Innenrings 5 größer ist als der Innenradius des Außenrings 6 ergibt sich ein Bereich, in welchem sich der Innenring 5 und der Außenring 6 entlang der radialen Richtung überlappen. Diese Überlappung kommt dadurch zustande, dass die äußere Mantelfläche 7 des Innenrings 5 eine Nut 8 und die innere Mantelfläche 9 des Außenrings 6 einen in die Nut 8 eingreifenden Radialvorsprung 10 aufweist. Ferner überlappen sich der Innenring 5 und der Außenring 6 im Bereich des Radialvorsprungs 10 in axialer Richtung, d.h. in einer Richtung, die parallel zur Rotationsachse R der Wälzlageranordnung verläuft.

Am Innenring 5 sind zwei Laufbahnen 11, 12 für kugelförmige Wälzkörper 13, 14 angeordnet. Die Laufbahnen 11, 12 des Innenrings 5 sind im Bereich der Nut 8, insbesondere an den Innenseiten der Nut 8, vorgesehen. Der Außenring 6 weist ebenfalls zwei Laufbahnen 15, 16 auf, in welchen die kugelförmigen Wälzkörper 13, 14 geführt sind. Die Laufbahnen 15, 16 des Außenrings 6 sind an den Flanken des Radialvorsprungs 10, insbesondere im Übergangsbereich der Flanken und eine in Richtung des Innenrings 5 weisenden inneren Mantelfläche 19 des Radialvorsprungs 10, ausgebildet. Die Laufbahnen 11, 12, 15, 16 weisen eine Innenkontur mit einem kreislinienförmigen Querschnitt auf. Der Radius der der Innenkontur der Laufbahnen 11, 12, 15, 16 ist im Wesentlichen identisch, wobei der Radius geringfügig größer gewählt ist als der Radius der kugelförmigen Wälzkörper 13, 14. Alternativ können die Radien der Laufbahnen 11, 12, 15, 16, an welchen ein Wälzkörper 13,1 4 anliegt auch unterschiedlich sein. Durch die unterschiedlichen Radien der Laufbahnen 11, 12, 15, 16 und der kugelförmigen Wälzkörper 13, 14 berühren die kugelförmigen Wälzkörper 13, 14 die entsprechenden Laufbahnen 11, 12, 15, 15 in einem Berührungspunkt.

Die Lage dieser Berührungspunkte definiert den Tragwinkel und ist abhängig von der relativen Lage der Mittelpunkte der kugelförmigen Wälzkörper 13, 14 und der Mittelpunkte derjenigen Kreise, welche die Innenkontur der Laufbahnen 11, 12, 15, 16 definieren. In dem Fall, dass die Mittelpunkte eines kugelförmigen Wälzkörpers 13 und die beiden Mittelpunkte derjenigen Kreise, welche die Innenkontur der Laufbahnen 11, 15 des Wälzkörpers 13 definieren, auf einer gemeinsamen Zylindermantelfläche um die Rotationsachse R der Wälzlageranordnung liegen, sind auch die Berührungspunkte zwischen dem Wälzkörper 13 und den entsprechenden Laufbahnen 11, 15 auf der gemeinsamen Zylindermantelfläche angeordnet. Es ergibt sich ein Tragwinkel, den eine Verbindungslinie zwischen den Zentren der Berührungspunkte des Wälzkörpers 13 mit dessen beiden Laufbahnen 11, 15 gegenüber einer zur Rotationsachse R senkrechten Ringebene E einschließt, von 90 Grad.

Abweichend von der zuvor beschrieben Konstellation, ist bei der erfindungsgemäßen Wälzlageranordnung ein Tragwinkel im Bereich von 60 bis 65 Grad, bevorzugt von 63 bis 65 Grad, besonders bevorzugt von 60 oder 61 oder 62 oder 63 oder 64 oder 65 Grad vorgesehen. Dies wird dadurch erreicht, dass die Berührungspunkte zwischen dem ersten kugelförmigen Wälzkörper 13 und den entsprechenden Laufbahnen 11, 15 auf einer Kegelmantelfläche um die Rotationsachse R angeordnet sind. Ebenso sind die Berührungspunkte zwischen dem zweiten kugelförmigen Wälzkörper 14 und den entsprechenden Laufbahnen 12, 16 auf einer Kegelmantelfläche um die Rotationsachse R angeordnet. Insofern schließt eine Verbindungslinie zwischen den Berührungspunkten eines Wälzkörpers 13, 14 mit dessen beiden Laufbahnen 11, 12, 15, 16 gegenüber einer zur Rotationsachse R senkrechten Ringebene E einen Tragwinkel ein, welcher in dem zuvor genannten Bereich liegt bzw. den zuvor genannten Wert aufweist.

Die Wälzlageranordnung weist neben den beiden Reihen von kugelförmigen Wälzkörpern 13, 14 zusätzlich ein radiales Zusatzlager 20 auf, in welchem eine Reihe von als Zylinderrollen ausgebildeten Wälzkörpern 21 enthalten ist. Das radiale Zusatzlager 20 ist in axialer Richtung zwischen den beiden Reihen von kugelförmigen Wälzkörpern 13, 14 angeordnet, insbesondere in der Mitte der Strecke zwischen den beiden Reihen. Die jeweiligen Drehachsen der Zylinderrollen verlaufen im Wesentlichen parallel zur Rotationsachse R, was bedeutet, dass diese einen Tragwinkel von weniger als 20 Grad, bevorzugt von weniger als 7 Grad, besonders bevorzugt von weniger als 3 Grad oder von im Wesentlichen 0 Grad aufweisen. An einer Stirnseite des Radialvorsprungs 10 ist eine Laufbahn 22 vorgesehen, in welcher die Zylinderrollen laufen. Eine weitere Laufbahn 23 für die Zylinderrollen ist in der umlaufenden Nut 8 ausgebildet. Diese Laufbahn 23 ist mittig in der Nut 8 angeordnet.

Um das Einbringen der Wälzkörper 13, 14, 21 zu erleichtern, ist der Innenring 5 zweiteilig ausgebildet. Der Innenring 5 weist ein erstes Ringelement 5.1 und ein zweites Ringelement 5.2 auf, welche lösbar aneinander festlegbar sind, beispielsweise über eine Schraubverbindung.

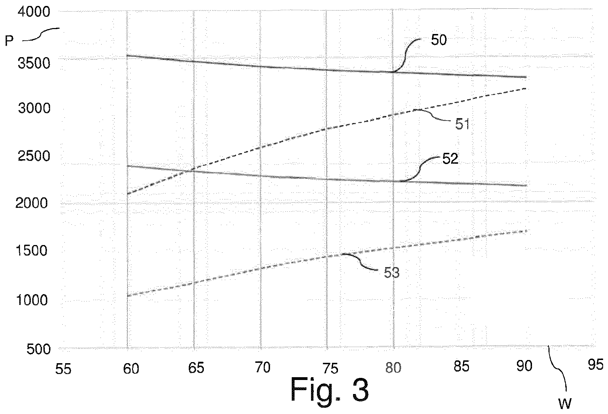

Die Vorteile, die sich durch die Wahl eines Tragwinkels im Bereich von 60 bis 65 Grad ergeben, sollen nachfolgend anhand der in den Figuren 3 bis 7 dargestellten Diagramme näher erläutert werden.

Der Darstellung in **Figur 3** ist die auftretende Flächenpressung in N/mm² zwischen einem Wälzkörper 13, 14, 21 und der entsprechenden Laufbahn 11, 12, 15, 16, 22, 23 in Abhängigkeit von dem Tragwinkel W für zwei typische Lastfälle dargestellt. Die obere durchgezogene Linie 50 bezeichnet die Flächenpressung eines kugelförmigen Wälzkörpers 13, 14 und der entsprechenden Laufbahn 11, 12, 15, 16 in einem ersten Lastfall. Die obere gestrichelte Linie 51 bezeichnet die Flächenpressung eines als Zylinderrolle ausgebildeten Wälzkörpers 21 und der entsprechenden Laufbahn 22, 23 für den ersten Lastfall. In einem zweiten Lastfall mit im Vergleich zum ersten Lastfall verringerter Last ergibt sich entsprechend die als untere durchgezogenen Linie 52 dargestellte Flächenpressung für den kugelförmigen Wälzkörper 13, 14 und die als untere gestrichelten Linie 53 gezeigte Flächenpressung für den als Zylinderrolle ausgebildeten Wälzkörper 21.

Es ist deutlich zu erkennen, dass die Belastung der kugelförmigen Wälzkörper 13, 14 bei einem Tragwinkel von 90 Grad minimal ist. Wird der Tragwinkel W zu kleineren Werten verändert, führt dies bei einer Wälzlageranordnung wie sie in Fig. 2 gezeigt ist dazu, dass sich die Flächenpressung 50,52 der kugelförmigen Wälzkörper 13, 14 erhöht, während die Zylinderrollen 21 entlastet werden. Somit erhöht sich bei der erfindungsgemäßen Wälzlageranordnung mit einem Tragwinkel W im Bereich von 60 bis 65 Grad, bevorzugt von 63 bis 65 Grad, besonders bevorzugt von 60 oder 61 oder 62 oder 63 oder 64 oder 65 Grad, die Belastung der kugelförmigen Wälzkörper 13, 14 gegenüber einer Wälzlageranordnung mit einem Tragwinkel im Bereich um 90 Grad geringfügig.

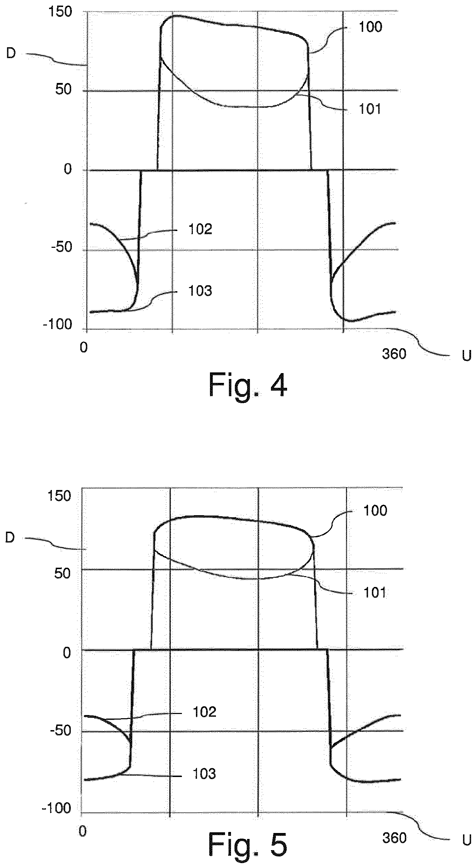

Dieser Nachteil der gestiegenen Belastung der kugelförmigen Wälzlager geht allerdings mit dem Vorteil einher, dass sich mit abnehmendem Tragwinkel W die tragende Umfangslänge in den Reihen der kugelförmigen Wälzlager 13, 14 verringert, wie nachfolgend anhand der Darstellung in den Figuren 4, 5, 6 und 7 erläutert werden soll.

In der **Figur 4** ist für den ersten Lastfall aus Figur 3 der Druckwinkel D der kugelförmigen Wälzkörper 13, 14 über der Abwicklung des Lagerumfangs U aufgetragen. Hierbei bezeichnet das Bezugszeichen 100 den maximalen Druckwinkel der Reihe mit den ersten kugelförmigen Wälzkörpern 13 und das Bezugszeichen 101 den minimalen Druckwinkel der ersten kugelförmigen Wälzkörper 13. Der Mittelwert beider Druckwinkel 100, 101 (oder auch Kontaktgrenzen) entspricht dem Tragwinkel W. Insofern liegt der Tragwinkel bei 60 Grad. Für die Reihe mit den zweiten kugelförmigen Wälzkörpern 14 ist der maximale Druckwinkel mit 103 und der minimale Druckwinkel mit 102 bezeichnet. In den Bereichen, in welchen der maximale Druckwinkel mit dem minimalen Druckwinkel zusammenfällt, sind die Wälzkörper 13, 14 entlastet.

Die **Figur 5** zeigt eine entsprechende Darstellung für den zweiten Lastfall aus Figur 3.

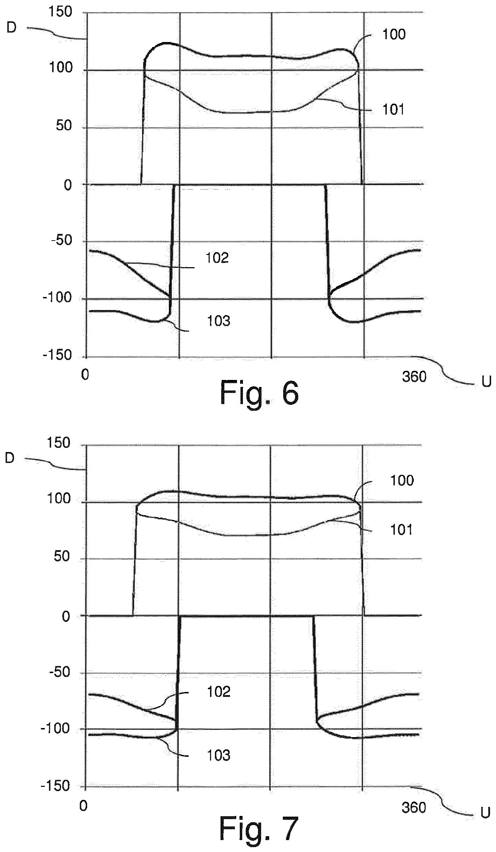

Zum Vergleich ist in der **Figur 6** eine entsprechende Darstellung für den ersten Lastfall aus Figur 3 gezeigt, wobei der Tragwinkel W bei 90 Grad gewählt ist. Die **Figur 7** zeigt eine entsprechende Darstellung für den zweiten Lastfall und einen Tragwinkel von 90 Grad.

Es ist deutlich zu erkennen, dass bei einem Tragwinkel im Bereich von 60 bis 65 Grad, insbesondere bei einem Tragwinkel von 60 oder 61 oder 62 oder 63 oder 64 oder 65 Grad, ein Umfangsbereich gegeben ist, in welchen die kugelförmigen Wälzkörper 13, 14 belastet werden, welcher weniger als die Hälfte des Umfangs der Wälzlageranordnung einnimmt, vgl. Figur 4 und 5. Bei einem Tragwinkel von 90 Grad hingegen, beträgt der Umfangsbereich, in welchem die kugelförmigen Wälzkörper 13, 14 belastet werden, mehr als 180 Grad, vgl. Figur 6 und 7. Bei derartig großen Umfangsbereichen, in welchem die kugelförmigen Wälzkörper 13, 14 belastet werden, kommt es zu einer Überlappung der Umfangsbereiche, welche zu einer unerwünschten Verspannung des Radialvorsprungs 10 sowie zu unerwünschten Umfangskräften in der Reihe der kugelförmigen Wälzkörper 13, 14 und damit zu einer Drehwiderstandserhöhung führen kann. Insofern ist im Bereich von 60 bis 65 Grad, insbesondere bei einem Tragwinkel von 60 oder 61 oder 62 oder 63 oder 64 oder 65 Grad ein Optimum erreicht, wobei nur eine geringfügige Erhöhung der Belastung der kugelförmigen Wälzlager 13, 14 gegeben ist und gleichzeitig unerwünschte Effekte, die eine Drehwiderstandserhöhung zu Folge haben können, reduziert werden.

Die vorstehend beschriebene Wälzlageranordnung, insbesondere Großwälzlageranordnung, weist einen Innenring 5 und einen relativ zum Innenring 5 um eine Rotationsachse R drehbaren und in radialer Richtung überlappenden Außenring 6 auf, wobei zwischen dem Innenring 5 und dem Außenring 6 zwei in axialer Richtung zueinander versetzte Reihen von kugelförmigen Wälzkörpern 13, 14 angeordnet sind, wobei die Wälzkörper 13, 14 jeweils in am Innenring 5 und am Außenring 6 ausgebildeten Laufbahnen 11, 12, 15, 16 laufen, wobei der Innenring 5 und der Außenring 6 einander mittels eines am Innenring 5 oder am Außenring 6 ausgebildeten zwischen die zwei Reihen von Wälzkörpern 13, 14 vorspringenden Radialvorsprungs 10 in axialer Richtung überlappen, und wobei der Tragwinkel, den eine Verbindungslinie zwischen den Zentren der Berührungspunkte eines Wälzkörpers 13, 14 mit dessen beiden Laufbahnen 11, 12, 15, 16 gegenüber einer zur Rotationsachse R senkrechten Ringebene E einschließt, in einem Bereich von 60 bis 65 Grad, insbesondere bei einem Tragwinkel von 60 oder 61 oder 62 oder 63 oder 64 oder 65 Grad, liegt.

### Bezugszeichenliste

- 1: Windkraftanlage
- 2: Rotorblatt
- 3: Rotor
- 4: Blattlager
- 5: Innenring
- 6: Außenring
- 7: Mantelfläche
- 8: Nut
- 9: Mantelfläche
- 10: Radialvorsprung
- 11: Laufbahn
- 12: Laufbahn
- 13: Wälzkörper
- 14: Wälzkörper
- 15: Laufbahn
- 16: Laufbahn
- 19: Mantelfläche
- 20: Zusatzlager
- 21: Wälzkörper
- 22: Laufbahn
- 23: Laufbahn

- E: Ringebene
- P: Flächenpressung
- R: Rotationsachse
- W: Tragwinkel

## Patentansprüche

1. Wälzlageranordnung, insbesondere Großwälzlageranordnung, aufweisend einen Innenring (5) und einen relativ zum Innenring (5) um eine Rotationsachse (R) drehbaren und in radialer Richtung überlappenden Außenring (6), wobei zwischen dem Innenring (5) und dem Außenring (6) zwei in axialer Richtung zueinander versetzte Reihen von kugelförmigen Wälzkörpern (13, 14) angeordnet sind, wobei die Wälzkörper (13, 14) jeweils in am Innenring (5) und am Außenring (6) ausgebildeten Laufbahnen (11, 12, 15, 16) laufen, wobei der Innenring (5) und der Außenring (6) einander mittels eines am Innenring (5) oder am Außenring (6) ausgebildeten zwischen die zwei Reihen von Wälzkörpern (13, 14) vorspringenden Radialvorsprungs (10) in axialer Richtung überlappen,
**dadurch gekennzeichnet, dass**
der Tragwinkel, den eine Verbindungslinie zwischen den Zentren der Berührungspunkte eines Wälzkörpers (13, 14) mit dessen beiden Laufbahnen (11, 12, 15, 16) gegenüber einer zur Rotationsachse (R) senkrechten Ringebene (E) einschließt, in einem Bereich von 60 bis 65 Grad liegt.

2. Wälzlageranordnung nach Anspruch 1, wobei der Außenring (6) oder der Innenring (5) eine umlaufende Nut (8) aufweist, in welche der am Innenring (5) oder am Außenring (6) angeordnete Radialvorsprung (10) entgegen der radialen Richtung vorsteht.

3. Wälzlageranordnung nach einem der vorhergehenden Ansprüche, wobei an den Flanken des Radialvorsprungs (10) Laufbahnen (11, 12, 15,1 6) für die kugelförmigen Wälzkörper (13, 14) ausgebildet sind.

4. Wälzlageranordnung nach einem der vorhergehenden Ansprüche, wobei in axialer Richtung zwischen den beiden Reihen von Wälzkörpern (13, 14) ein radiales Zusatzlager (20) angeordnet ist.

5. Wälzlageranordnung nach Anspruch 4, wobei das radiale Zusatzlager (20) Wälzkörper (21) in Form von Zylinderrollen aufweist, wobei die jeweiligen Drehachsen der Zylinderrollen im Wesentlichen parallel zur Rotationsachse (R) verlaufen, wobei eine Laufbahn (22) für die Zylinderrollen an einer Stirnseite des Radialvorsprungs (10) ausgebildet ist und wobei eine andere Laufbahn (23) für die Zylinderrollen mittig in der umlaufenden Nut (8) ausgebildet ist.

6. Wälzlageranordnung nach einem der vorhergehenden Ansprüche, wobei die Wälzlageranordnung einen Durchmesser im Bereich von 1 m bis 10 m, bevorzugt von 3 m bis 7 m, besonders bevorzugt von 4 m bis 6 m aufweist.

7. Blattlager für eine Windkraftanlage (1) aufweisend eine Wälzlageranordnung nach einem der vorhergehenden Ansprüche.

## Claims

1. Rolling bearing arrangement, in particular large rolling bearing arrangement, having an inner ring (5) and an outer ring (6), which, relative to the inner ring (5), is rotatable about an axis of rotation (R) and has an overlap in the radial direction, wherein two rows of spherical rolling bodies (13, 14), which rows are offset from one another in an axial direction, are arranged between the inner ring (5) and the outer ring (6), wherein the rolling bodies (13, 14) each run in raceways (11, 12, 15, 16) formed on the inner ring (5) and on the outer ring (6), wherein the inner ring (5) and the outer ring (6) overlap one another in an axial direction by means of a radial projection (10) formed on the inner ring (5) or on the outer ring (6) and projecting between the two rows of rolling bodies (13, 14),
**characterized in that**
the support angle, which a connecting line between the centres of the points of contact of a rolling body (13, 14) with the two raceways (11, 12, 15, 16) thereof encloses with respect to a ring plane (E) perpendicular to the axis of rotation (R), lies in a range from 60 to 65 degrees.

2. Rolling bearing arrangement according to Claim 1, wherein the outer ring (6) or the inner ring (5) has an encircling groove (8) into which the radial projection (10) arranged on the inner ring (5) or on the outer ring (6) projects counter to the radial direction.

3. Rolling bearing arrangement according to either of the preceding claims, wherein raceways (11, 12, 15, 16) for the spherical rolling bodies (13, 14) are formed on the flanks of the radial projection (10).

4. Rolling bearing arrangement according to one of the preceding claims, wherein a radial additional bearing (20) is arranged between the two rows of rolling bodies (13, 14) in an axial direction.

5. Rolling bearing arrangement according to Claim 4, wherein the radial additional bearing (20) has rolling bodies (21) in the form of cylinder rolls, wherein the respective axes of rotation of the cylinder rolls run substantially parallel to the axis of rotation (R), wherein one raceway (22) for the cylinder rolls is formed on an end side of the radial projection (10), and wherein another raceway (23) for the cylinder rolls is formed centrally in the encircling groove (8).

6. Rolling bearing arrangement according to one of the preceding claims, wherein the rolling bearing arrangement has a diameter in the range from 1 m to 10 m, preferably from 3 m to 7 m, particularly preferably from 4 m to 6 m.

7. Blade bearing for a wind turbine (1), having a rolling bearing arrangement according to one of the preceding claims.

## Revendications

1. Agencement de palier à roulement, en particulier gros agencement de palier à roulement, présentant une bague intérieure (5) et une bague extérieure (6) pouvant tourner par rapport à la bague intérieure (5) autour d'un axe de rotation (R) et la chevauchant dans la direction radiale, deux rangées de corps de roulement de forme sphérique (13, 14) décalées l'une par rapport à l'autre dans la direction axiale étant disposées entre la bague intérieure (5) et la bague extérieure (6), les corps de roulement (13, 14) roulant à chaque fois dans des chemins de roulement (11, 12, 15, 16) réalisés au niveau de la bague intérieure (5) et au niveau de la bague extérieure (6), la bague intérieure (5) et la bague extérieure (6) se chevauchant mutuellement dans la direction axiale au moyen d'une saillie radiale (10), réalisée au niveau de la bague intérieure (5) ou au niveau de la bague extérieure (6), saillant entre les deux rangées de corps de roulement (13, 14),
**caractérisé en ce que**
l'angle de support formé par une ligne de liaison entre les centres des points de contact d'un corps de roulement (13, 14) avec ses deux chemins de roulement (11, 12, 15, 16) par rapport à un plan annulaire (E) perpendiculaire à l'axe de rotation (R) est compris dans une plage de 60 à 65°.

2. Agencement de palier à roulement selon la revendication 1, dans lequel la bague extérieure (6) ou la bague intérieure (5) présente une rainure périphérique (8) dans laquelle la saillie radiale (10) disposée au niveau de la bague intérieure (5) ou au niveau de la bague extérieure (6) fait saillie dans le sens opposé à la direction radiale.

3. Agencement de palier à roulement selon l'une quelconque des revendications précédentes, dans lequel des chemins de roulement (11, 12, 15, 16) pour les corps de roulement de forme sphérique (13, 14) sont réalisés au niveau des flancs de la saillie radiale (10).

4. Agencement de palier à roulement selon l'une quelconque des revendications précédentes, dans lequel un palier supplémentaire radial (20) est disposé dans la direction axiale entre les deux rangées de corps de roulement (13, 14).

5. Agencement de palier à roulement selon la revendication 4, dans lequel le palier supplémentaire radial (20) présente des corps de roulement (21) en forme de rouleaux cylindriques, les axes de rotation respectifs des rouleaux cylindriques s'étendant essentiellement parallèlement à l'axe de rotation (R), un chemin de roulement (22) pour les rouleaux cylindriques étant réalisé au niveau d'un côté frontal de la saillie radiale (10) et un autre chemin de roulement (23) pour les rouleaux cylindriques étant réalisé centralement dans la rainure périphérique (8).

6. Agencement de palier à roulement selon l'une quelconque des revendications précédentes, l'agencement de palier à roulement présentant un diamètre dans une plage de 1 m à 10 m, de préférence de 3 m à 7 m, particulièrement préférablement de 4 m à 6 m.

7. Logement de pale pour une éolienne (1), présentant un agencement de palier à roulement selon l'une quelconque des revendications précédentes.
